# EUROPEAN PATENT APPLICATION

(11) **EP 4 023 116 A1**
(43) Date of publication of application: **06.07.2022**
(21) Application number: 21216912.2
(22) Date of filing: 22.12.2021
(51) Int. Cl.: A47J 19/02, A47J 43/26, A23N 5/03, A23L 2/04

(54) **ASSEMBLY FOR ACCESSING COCONUT WATER IN COCONUT**

(30) Priority: 23.12.2020 AU 2020294234
(71) Applicant: K Fresh Co., Ltd, Samutprakarn, 10270 (TH)
(72) Inventor: MANUSRUNGSRI, Kemtas, 10270 Samutprakarn (TH); MANUSRUNGSRI, Waraporn, 10270 Samutprakarn (TH)
(74) Representative: TBK

(57) **Abstract**

The present invention provides an assembly for accessing coconut water in a coconut comprising a screw having a rod with spiral threads on the outside surface of the rod and a sharp tip for drilling through coconut shell, and a handle on the top of the rod for twisting the rod through the coconut shell; and a lid having a threaded through-hole on the vertical center thereof for receiving and housing a sharp tip of the rod, wherein the lid of the assembly is placed and fixed on the germination pore of the coconut by a fixing means and wherein the screw is prevented from drilling the coconut shell by locking means.

## Description

### Technical Field

The present invention relates to an assembly for accessing coconut water in coconut and, more particularly, to such assembly having a screw with a sharp tip for drilling through coconut shell, thereby permitting the access of the coconut water inside the coconut.

### Background Art

The young fruit of the coconut is technically a large drupe composed of a thin outer layer called exocarp, a thick and fibrous middle layer called a mesocarp, and a hard inner layer called an endocarp that surrounds a large seed. The endocarp contains three germination pores at one end, one of which the sprouting coconut palm grows through. The "meat" of the seed is endosperm tissue, and a small, cylindrical embryo is embedded in this nutritive tissue just opposite the functional germination pore. The seed is surrounded by an outer layer called the seed coat or testa. This is the material that adheres to the white "meat" or endosperm when it is removed from the endocarp shell. "Coconut water" is a multinucleate liquid endosperm that has not yet developed into solid tissue composed of cells. Many people enjoy the health benefits, nutrients, and taste of virgin coconut water straight from the fresh husked young coconut, roasted or boiled aromatic coconut.

WO2014129984A1 discloses an easy-to-open roasted or boiled aromatic coconut comprising a coconut from which the husk was removed until a clean shelled coconut is obtained and groove like on the shell of the coconut characterized 3/4 that said groove line is at least one converged groove line located at the bottom; of the shell of the coconut and that said groove line is made by laser engraving using a laser engraver. The easy-to-open roasted or boiled aromatic coconut further comprises an opening means fixed within one converged groove line, near the groove line. The consumers can open the coconut shell by pulling the opening means such as a pull-ring. In the case where at least one converged groove line is a large circle groove and a small circle groove wherein the pull-ring is fixed near the small circle groove, this allows the coconut shell within the small circle groove to be opened, revealing the coconut meat inside. Through this small hole, the consumer can insert a tube to drink the coconut water arid when the juice is drunk up. The consumer can easily open the coconut shell further in order to eat the coconut meat by pulling the coconut shell within the large circle groove off by hand.

WO2014146037A1 discloses systems and methods associated with installing a valve accessing and removing liquid from within a coconut. This process involves installing a valve, wherein the valve may include a plunger constructed and arranged to pierce a coconut shell. Among other things, innovations herein may involve installing a valve with flange and/or grommet type structures constructed and arranged to pierce a coconut husk and stop the insertion of the plunger into the coconut at a predetermined point.

Coconut valves of WO2014146037A1 are inserted into coconuts having a tooled aperture placed through or within the coconut wall having a predetermined diameter so that a valve plug seats within said aperture with a valve plug collar substantially engaging the wall of the aperture. The valve plug may include a valve plug bore for receiving a plunger sleeve having a plunger sleeve bore with a based positioned plunger sleeve membrane that seals the coconut's contents until a plunger stopper having a plunger-stopper lance and plunger-stopper lance tip is used to puncture a plunger sleeve membrane, thereby providing access to the coconut water contained within the coconut. The plunger-stopper may be tethered to the plunger sleeve. The plunger-stopper may provide access to the coconut's contents and also serves as a stopper to seal any remaining coconut contents for future use, as the plunger-stopper may seal the plunger sleeve bore.

In the production of the Easy-to-open roasted or boiled aromatic coconut and the coconut with valve plug according to the prior arts, the shell of the coconut is made to have tooled aperture to install the pulling-ring or plug valve. This may cause the coconut shell to be broken, and the coconut meat under the broken coconut shell may be exposed to contaminants and consequently rotten.

WO/2020/106224 discloses an assembly for accessing coconut water in coconut has a plunger for puncturing the germination pore of the coconut, thereby permits the access of the coconut water inside the coconut. The assembly comprises a plunger having a plunger collar perpendicularly mounted to a plunger lance, a lid having a lid bore for receiving and housing a tip of the plunger lance, and a stopper clip for holding the plunger lance in order to prevent the tip of the plunger lance in the lid bore from puncturing a germination pore of the coconut, wherein the lid of the assembly is placed and fixed on the germination pore of the coconut by a fixing mean.

### Summary of Invention

It is one of the objects of the present invention to provide an assembly that can be readily and easily inserted through the coconut layers with relatively small force puncture through the germination pore of the coconut, permitting the consumer to access the coconut water inside. In addition, utilization of the assembly, according to the invention, does not wound or interfere the intact of shell of the coconut to reduce the risk of contamination.

Another object of the invention is to provide not only the assembly of such that is inexpensive to manufacture but also to maintain its effectiveness.

Another object of the invention will be mentioned in the following part of the specification, wherein detailed description is for the purpose of fully disclosing the embodiments without placing limitations thereon.

### Brief description of the drawings

The present invention is illustrated by way of example, and not by way of limitation, in the figures of the accompanying drawings and in which like reference numerals refer to similar elements and in which:

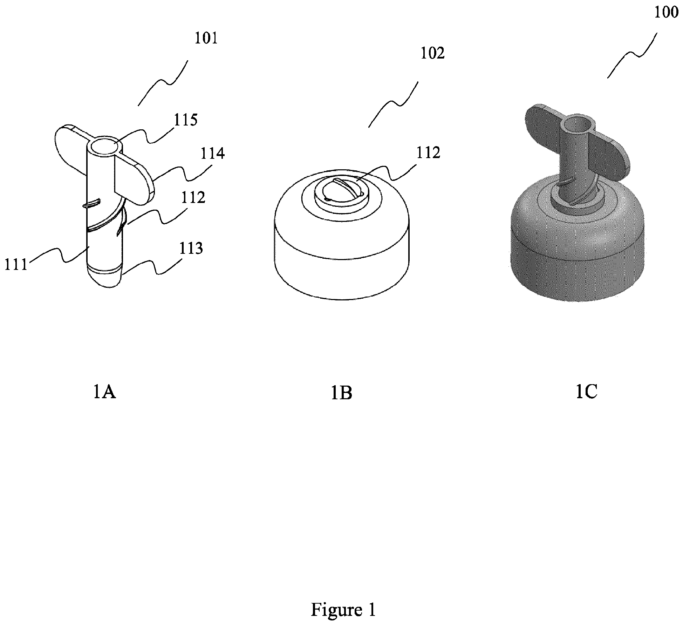

Fig. 1 represents the assembly for accessing coconut water in coconut and the components thereof according to one embodiment of the present invention. Fig. 1A represents the screw of the assembly of the present invention. Fig 1B represents the lid of the assembly of the present invention. Fig 1C represents the perspective view of the assembly of the present invention.

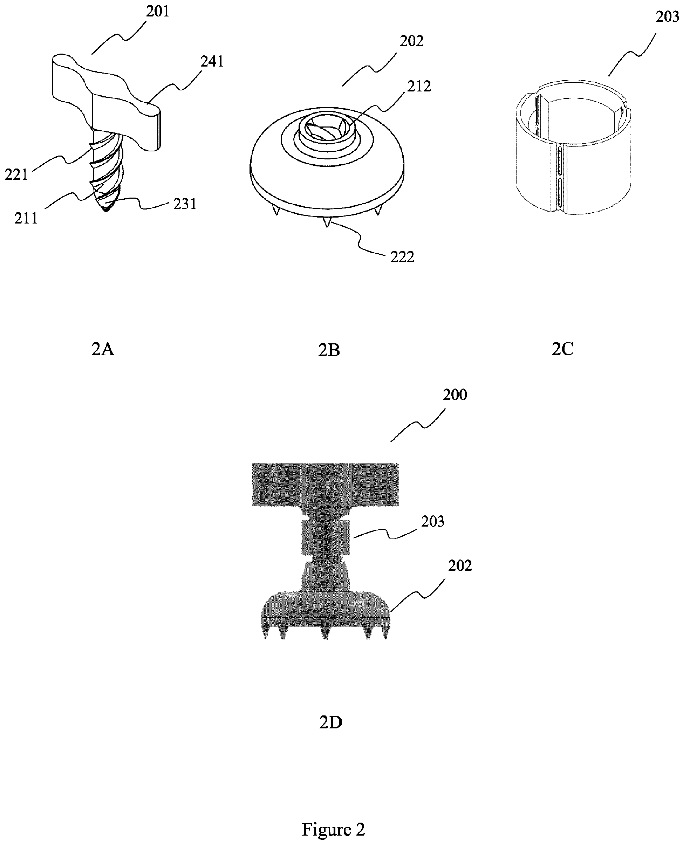

Fig. 2 represents the assembly for accessing coconut water in coconut and the components thereof according to one embodiment of the present invention. Fig 2B represents the lid of the assembly of the present invention. Fig. 2C represents the stopper of the assembly of the present invention. Fig. 2D represents the side view of the assembly of the present invention.

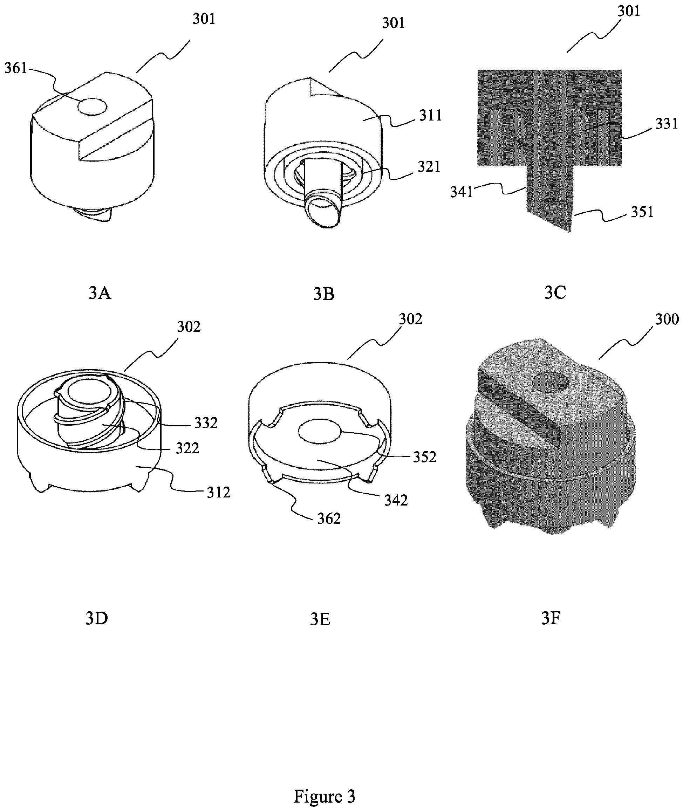

Fig. 3 represents the assembly for accessing coconut water in coconut and the components thereof according to one embodiment of the present invention. Figs. 3A-3C represent the drilling cap of the assembly of the present invention. Figs. 3D-3E represent the lid of the assembly of the present invention. Fig. 3F represents the perspective view of the assembly of the present invention.

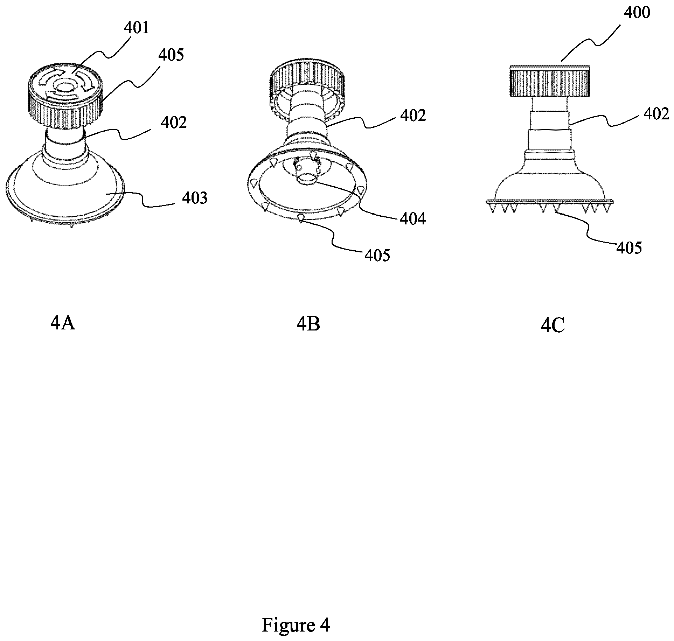

Fig. 4 represents the assembly for accessing coconut water in coconut and the components thereof according to one embodiment of the present invention. Figs. 4A-4B represent the perspective view of the assembly of the present invention. Fig. 4D represents the side view of the assembly of the present invention.

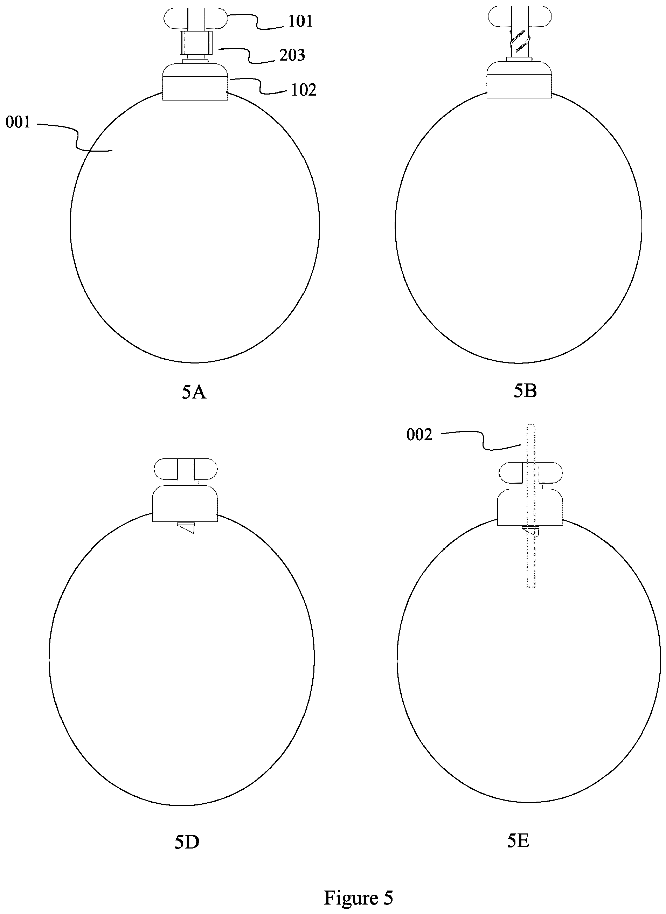

Fig. 5 is a pictorial representation of the assembly of the present invention as it is utilized with coconut to access the coconut water.

Unless otherwise indicated, illustrations in the figures are not necessarily drawn to scale.

### Description of Embodiments

The present invention is best understood by reference to the detailed figures and description set forth herein.

Embodiments of the invention are discussed below with reference to the Figures. However, those skilled in the art will readily appreciate that the detailed description given herein with respect to these figures is for explanatory purposes as the invention extends beyond these limited embodiments. For example, it should be appreciated that those skilled in the art will, in light of the teachings of the present invention, recognize a multiplicity of alternate and suitable approaches, depending upon the needs of the particular application, to implement the functionality of any given detail described herein, beyond the particular implementation choices in the following embodiments described and shown. That is, there are modifications and variations of the invention which are too numerous to be listed but that all that fit within the scope of the invention. Also, singular words should be read as plural and vice versa where appropriate, and alternative embodiments do not necessarily imply that the two are mutually exclusive.

It is to be further understood that the present invention is not limited to the particular methodology, compounds, materials, manufacturing techniques, uses, and applications, described herein, as these may vary. It is also to be understood that the terminology used herein is used for the purpose of describing particular embodiments only and is not intended to limit the scope of the present invention. It must be noted that as used herein and in the appended claims, the singular forms "a," "an," and "the" include the plural reference unless the context clearly dictates otherwise. Thus, for example, a reference to "a means" is a reference to one or more means and may include subservient means. All conjunctions used are to be understood in the most inclusive sense possible. Thus, the word "or" should be understood as having the definition of a logical "or" rather than that of a logical "exclusive or" unless the context clearly necessitates otherwise. Structures described herein are to be also understood to refer to functional equivalents of such structures.

With respect to the terms "comprising," "consisting of," and "consisting essentially of," where one of these three terms is used herein, the presently disclosed and claimed subject matter might include the use of either of the other two terms. Thus in some embodiments not otherwise explicitly recited, any instance of "comprising" may be replaced by "consisting of' or, alternatively, by "consisting essentially of."

Referring to Fig 1, where one embodiment of the present invention is referred to with numeral **100.** The assembly **100** (see Fig. 1C) for accessing coconut water of the coconut comprises:
a screw **101** (see Fig. 1A) is configured to have a rod **111** with spiral threads **112** on the outside surface of the rod **111** and a sharp tip **113** for drilling through coconut shell, and a handle **114** on the top of the rod **111** for twisting the rod through the coconut shell; and
a lid **102** (see Fig. 1B) is configured to have a threaded through-hole **112** on the vertical center thereof for receiving and housing a sharp tip **113** of the rod **111,** through the through-hole **112** for screwing on to the rod **111.**

The lid **102** of the assembly is placed and fixed on the germination pore of the coconut by a fixing means. The fixing means may include adhesive, adhesive tape, wrapping material, fastening material applied to fix the lid on the germination pore of the coconut without penetrating, destroying or interfering with the shell of the coconut.

The screw **101** may have a bore **115** through the vertical center of thereof where straw can be inserted from the top of the screw **101** through the sharp tip **113** of the rod **111**.

The handle **114** may be a small knob or disk or the like perpendicularly mounted to the top of the rod **111** for facilitating the twist of the screw.

The screw **101** may have a length of at least 2 cm, preferably 2-7 cm. The handle **114** may have a diameter of at least 1.5 cm, preferably 1.5-6 cm. The bore **115** may have a diameter of at least 0.4, preferably 0.4-2 cm.

The lid **102** of the assembly, according to the present invention, may be a cover having a rounded top or hemispherical roof or ceiling shaped like half of a ball or dome. The lid of the assembly according to the present invention may be formed in the rectangular top shaped like a dome. The lid can be hollow or solid.

The lid **102** may have a diameter or width of at least 1 cm, preferably 1-7 cm and a high of at least 0.5 cm, preferably 0.5-5 cm.

The screw **101** may be prevented from drilling into the coconut shell by locking means which lock the screw from moving down through the lid when not in use. The locking means can be any means known to the person skilled in the art that can prevent the screw 101 from drilling into the coconut shell e.g. interlocking threads between the thread of the screw and the threaded through-hole of the lid or a stopper.

The stopper of the assembly according to the present invention may be any one of various devices that grip, clasp, hook or hold the screw in order to prevent the sharp tip of the screw in the lid bore from drilling the germination pore of the coconut.

Referring to Fig 2, where one embodiment of the present invention is referred to with numeral **200.** The assembly **200** for accessing coconut water of the coconut comprises:
a screw **201** (see Fig. 2A) is configured to have a rod **211** with spiral threads **221** on the outside surface of the rod **211** and a sharp tip **231** for drilling through coconut shell, and a handle **241** on the top of the rod **211** for twisting the rod through the coconut shell;
a lid **202** (see Fig. 2B) is configured to have a threaded through-hole **212** on the vertical center thereof for receiving and housing a sharp tip **231** of the rod **211**, through the through-hole **212** for screwing on to the rod **111**; and
the stopper **203** (see Fig. 2C) for holding the rod **211** in order to prevent the rod **211** in the threaded through-hole **212** of the lid **202** from drilling a germination pore of the coconut.

The lid **202** of the assembly is placed and fixed on the germination pore of the coconut by a fixing means. The fixing means may include adhesive, adhesive tape, wrapping material, fastening material applied to fix the lid on the germination pore of the coconut without penetrating, destroying or interfering with the shell of the coconut.

The screw **201** may have a bore (not shown) through the vertical center of the screw where straw can be inserted from the top of the screw **201** through the sharp tip **231** of the rod **211**.

The screw **201** may have a length of at least 2 cm, preferably 2-7 cm. The handle **241** may have a diameter of at least 1.5 cm, preferably 1.5-6 cm. The bore **115** may have a diameter of at least 0.4, preferably 0.4-2 cm.

The lid **202** of the assembly according to the present invention may be a cover having rounded top or hemispherical roof or ceiling shaped like half of a ball or dome. The lid of the assembly according to the present invention may be formed in the rectangular top shaped like a dome. The lid can be hollow or solid.

The lid **202** may have a diameter or width of at least 1 cm, preferably 1-7 cm and a high of at least 0.5 cm, preferably 0.5-5 cm. The lower circumference of the lid may have a plurality of legs **222** vertically extending therefrom for slip resistance on the coconut shell.

The assembly according to the present invention can be made of any one of various materials e.g. biomaterial, wood, plastic, metal, wood, resin, stone, ceramic, fiber, glass, composite material or the combination thereof.

The stopper **203** may be tethered to the handle **241** of the screw **201.** The handle **241** may be a small knob or disk or the like perpendicularly mounted to the top of the rod **211** for facilitating the twist of the screw **201.**

The stopper 203 of the invention may be a stopper clip or a tear-off control strip surrounding the rod **211** over the lid **202.**

The stopper of the assembly according to the present invention may be any one of various devices that grip, clasp, hook or hold the screw in order to prevent the sharp tip of the screw in the lid bore from drilling the germination pore of the coconut.

Referring to Fig 3, where one embodiment of the present invention is referred to with numeral **300.** The assembly **300** for accessing coconut water of the coconut comprises:
a two-layered drilling cap **301** (see Figs 3A-3C) is configured to have a first cylindrical sidewall **311**, a first nut-like component **321** with a threaded hole **331** integrally mounted inside the first cylindrical sidewall **311** at the vertical center of the two-layered drilling cap **301**, and a coaxial rod **341** with a sharp tip **351** vertically extending from the top of the two-layered drilling cap **301** beyond the first cylindrical sidewall **311** through the threaded hole 331 of the nut-like component **321**; and
a lid **302** (see Figs 3D-3E) is configured to have a second cylindrical sidewall **312** and a second nut-like component **322** with spiral threads **332** on the outside surface of the second nut-like component **322**, wherein the second nut-like component **322** vertically extending from the center of the lid base **342**; and wherein the second nut-like component **322** has a through-hole **352** for receiving and housing the sharp tip **351** of the coaxial rod **341** and the second nut-like component **322** is adapted to fit over the first nut-like component **321** of the two-layered drilling cap **301** whereby capable of threadably engaging the threaded hole **331** of the first nut-like component **321.**

The two-layered drilling cap **301** may have a bore **361** through the vertical center of the two-layered drilling cap where straw can be inserted from the top of the two-layered drilling cap **301** through the sharp tip **351** of the rod **341.**

The lower circumference of the lid **302** may have a plurality of legs **362** vertically extending therefrom for slip resistance on the coconut shell.

The lid **302** of the assembly is placed and fixed on the germination pore of the coconut by a fixing means.

In another embodiment (not shown in the Figure), an assembly for accessing coconut water of the coconut comprising:
a drilling cap is configured to have a first cylindrical sidewall and a rod with spiral threads on the outside surface thereof with a sharp tip vertically extending from the top vertical center of the cap beyond the sidewall; and
a lid is configured to have a second cylindrical sidewall and a second nut-like component wherein the second nut-like component vertically extending from the vertical center of the lid base; and wherein the second nut-like component has a through-hole for receiving and housing a tip of the rod and the second nut-like component is adapted to fit over the first nut-like component of the drilling cap whereby capable of threadably engaging the threaded hole of the first nut-like component.

The lid of the assembly is placed and fixed on the germination pore of the coconut by a fixing means.

The above assembly further comprises interlocking threads or a stopper for holding the drilling cap in order to prevent the rod in the lid from drilling a germination pore of the coconut. The stopper may be a tear-off control strip interconnected to the lower circumference of the first sidewall of the drilling cap and the upper circumference of the second sidewall of the lid.

The assembly according to the present invention can be made of any one of various materials e.g. biomaterial, wood, plastic, metal, wood, resin, stone, ceramic, fiber, glass, composite material or the combination thereof.

Referring to Fig 4, where one embodiment of the present invention is referred to with numeral **400.** The assembly **400** for accessing coconut water of the coconut comprises:
a screw **401** (see Fig. 4A) is configured to have a rod (not shown) with spiral threads (not shown) on the outside surface of the rod and a sharp tip **404** for drilling through coconut shell, and a handle **405** on the top of the rod for twisting the rod through the coconut shell;
a lid **403** (see Fig. 4B) is configured to have a threaded through-hole (not shown) on the vertical center thereof for receiving and housing a sharp tip **404** of the rod; and
the stopper **402** (see Fig. 4C) for holding the rod of the screw in order to prevent the rod in the threaded through-hole of the lid **402** from drilling a germination pore of the coconut.

The lid **403** of the assembly is placed and fixed on the germination pore of the coconut by a fixing means. The fixing means may include adhesive, adhesive tape, wrapping material, fastening material applied to fix the lid on the germination pore of the coconut without penetrating, destroying or interfering with the shell of the coconut.

The screw **401** may have a bore through the vertical center of the screw where straw can be inserted from the top of the screw **401** through the sharp tip **404** of the rod.

The screw **401** may have a length of at least 2 cm, preferably 2-7 cm. The handle **241** may have a diameter of at least 1.5 cm, preferably 1.5-6 cm. The bore may have a diameter of at least 0.4, preferably 0.4-2 cm.

The lid **403** of the assembly according to the present invention may be a cover having rounded top or hemispherical roof or ceiling shaped like half of a ball or dome. The lid of the assembly according to the present invention may be formed in the rectangular top shaped like a dome. The lid can be hollow or solid.

The lid **403** may have a diameter or width of at least 1 cm, preferably 1-7 cm and a high of at least 0.5 cm, preferably 0.5-5 cm. The lower circumference of the lid may have a plurality of legs **405** vertically extending therefrom for slip resistance on the coconut shell.

The assembly according to the present invention can be made of any one of various materials e.g. biomaterial, wood, plastic, metal, wood, resin, stone, ceramic, fiber, glass, composite material or the combination thereof.

The handle **405** may be a small knob or disk or the like perpendicularly mounted to the top of the rod for facilitating the twist of the screw **401.**

The stopper **402** of the invention may be a collapsible stopper including a plurality of annular steps or shoulders for enabling controlled axial collapse of the stopper to a compact, collapsed condition when twisting the rod through the coconut shell, wherein a plurality of substantially concentric folds of the stopper surrounds the rod of the screw.

Referring to Fig 5, the coconut **001** having an exemplary assembly for accessing coconut water of the coconut **001** is shown. The exemplary assembly of the present invention is installed on the coconut germination pore wherein the lid **102** is placed and fixed on the germination pore of the coconut by a fixing means.

Taking away or removing the stopper **203** from the screw **101**, the user can screw the screw 101 downward through the lid 102 with his/her force in order to drill the coconut shell by the sharp tip of the screw through the germination pore of the coconut for making a hole. The straw **002** can be inserted through the bore of the screw to access the coconut water inside the coconut.

As one embodiment of the present invention, a method for preparing a coconut having an assembly for accessing coconut water of the coconut comprises:
a. removing an outer husk covering the germination pores of the coconut;
b. placing the assembly of the invention on one of the germination pores of the coconut so that the screw of the assembly is above the germination pore;
c. fixing the lid of the assembly on one of the germination pores of the coconut by a fixing means.

The present invention provides an assembly for accessing coconut water in a coconut comprising a screw having a rod with spiral threads on the outside surface of the rod and a sharp tip for drilling through coconut shell, and a handle on the top of the rod for twisting the rod through the coconut shell; and a lid having a threaded through-hole on the vertical center thereof for receiving and housing a sharp tip of the rod, wherein the lid of the assembly is placed and fixed on the germination pore of the coconut by a fixing means and wherein the screw is prevented from drilling the coconut shell by locking means.

## Claims

1. An assembly for accessing coconut water of the coconut comprising:
a screw having a rod with spiral threads on the outside surface of the rod and a sharp tip for drilling through coconut shell, and a handle on the top of the rod for twisting the rod through the coconut shell; and
a lid having a threaded through-hole on the vertical center thereof for receiving and housing a sharp tip of the rod,
wherein the screw is prevented from drilling the coconut shell by locking means which lock the screw from moving down through the lid when not in use, and
wherein the lid of the assembly is placed and fixed on the germination pore of the coconut by a fixing means.

2. The assembly of claim 1, wherein the locking means include interlocking threads between the thread of the screw and the threaded through-hole of the lid or a stopper for holding the rod in order to prevent the rod in the threaded through-hole of the lid from drilling a germination pore of the coconut.

3. The assembly of claim 2, wherein the stopper is a stopper clip, a collapsible stopper or a tear-off control strip surrounding the rod over the lid.

4. The assembly of claim 2 or 3, wherein the stopper is tethered to the handle of the screw.

5. The assembly of any one of claims 1-4, wherein the screw have a bore through the vertical center thereof where straw can be inserted from the top of the screw through the tip of the rod.

6. An assembly for accessing coconut water of the coconut comprising:
a two-layered drilling cap having a first cylindrical sidewall, a first nut-like component with a threaded hole integrally mounted inside the sidewall at the vertical center of the cap, and a coaxial rod with a sharp tip vertically extending from the top of the cap beyond the sidewall through the threaded hole of the nut-like component; and
a lid having a second cylindrical sidewall and a second nut-like component with spiral threads on the outside surface thereof, wherein the second nut-like component vertically extending from the vertical center of the lid base; and wherein the second nut-like component has a through-hole for receiving and housing a tip of the coaxial rod and the second nut-like component is adapted to fit over the first nut-like component of the drilling cap whereby capable of threadably engaging the threaded hole of the first nut-like component, wherein the lid of the assembly is placed and fixed on the germination pore of the coconut by a fixing means.

7. An assembly for accessing coconut water of the coconut comprising:
a drilling cap having a first cylindrical sidewall and a rod with spiral threads on the outside surface thereof with a sharp tip vertically extending from the top vertical center of the cap beyond the sidewall; and
a lid having a second cylindrical sidewall and a second nut-like component wherein the second nut-like component vertically extending from the vertical center of the lid base; and wherein the second nut-like component has a through-hole for receiving and housing a tip of the rod and the second nut-like component is adapted to fit over the first nut-like component of the drilling cap whereby capable of threadably engaging the threaded hole of the first nut-like component, wherein the lid of the assembly is placed and fixed on the germination pore of the coconut by a fixing means.

8. The assembly of claim 6 or 7 further comprising interlocking threads or a stopper for holding the drilling cap in order to prevent the rod in the lid from drilling a germination pore of the coconut, wherein the stopper is a tear-off control strip interconnected to the lower circumference of the first sidewall of the drilling cap and the upper circumference of the second sidewall of the lid.

9. The assembly of any one of claims 6-8, wherein the drilling cap has a bore through the vertical center thereof where straw can be inserted from the top of the drilling cap through the tip of the rod.

10. The assembly of any one of claims 1-9, wherein the fixing means including adhesive, adhesive tape, wrapping material, fastening material applied to fix the lid on the germination pore of the coconut without interfering with the shell of the coconut.

11. The assembly of any one of claims 1-10 wherein the lower circumference of the lid has a plurality of legs vertically extending therefrom for slip resistance on the coconut shell.

12. A method for preparing a coconut having an assembly for accessing coconut water of the coconut, the method comprising:
a. removing an outer husk covering the germination pores of the coconut;
b. placing the assembly of any one of claims 1-11 on one of the germination pores of the coconut so that the sharp tip of the rod of the assembly is above the germination pore;
c. fixing the lid of the assembly on one of the germination pores of the coconut by a fixing means.

13. The method of claim 12, wherein the fixing means including adhesive, adhesive tape, wrapping material, fastening material applied to fix the lid on the germination pore of the coconut without interfering with the shell of the coconut.

14. A coconut having an assembly for accessing coconut water of the coconut, the coconut comprising:
a coconut showing the germination pore; and
an assembly of any one of claims 1-11 wherein the lid of the assembly is placed and fixed on the germination pore of the coconut by a fixing means.

15. The coconut of claim 14, wherein the fixing means including adhesive, adhesive tape, wrapping material, fastening material to fix the lid on the germination pore of the coconut without interfering with the shell of the coconut.
